# EUROPEAN PATENT SPECIFICATION

(11) **EP 4 733 613 B1**
(45) Date of publication and mention of the grant of the patent: **30.09.2026**
(21) Application number: 24209115.5
(22) Date of filing: 28.10.2024
(51) Int. Cl.: F16C 19/16, B63B 39/04, F16C 19/54, F16C 35/06

(54) **A GYROSCOPE BEARING SYSTEM**
GYROSKOPLAGERSYSTEM
SYSTÈME DE PALIER DE GYROSCOPE

(43) Date of publication of application: 29.04.2026
(73) Proprietor: Humphree AB, 417 05 Göteborg (SE)
(72) Inventor: HOLMENE, Björn, 433 70 SÄVEDALEN (SE)
(74) Representative: Ström & Gulliksson AB

(56) References cited:
- US-A1- 2021 269 127
- US-A1- 2022 349 711

## Description

### TECHNICAL FIELD

The disclosure relates generally to bearing system. In particular aspects, the disclosure relates to a gyroscope bearing system. The disclosure can be applied to marine vessels, such as water crafts, motorboats, work boats, sport vessels, boats, ships, sailing boats among other vessel types. Although the disclosure may be described with respect to a particular marine vessel, the disclosure is not restricted to any particular marine vessel.

### BACKGROUND

Marine gyroscopes are essential components in seafaring vessels, providing stability and reducing the rolling motion caused by ocean waves. A critical part of these gyroscopes is the bearing system, which supports the flywheel, allowing it to rotate with minimal friction. The flywheel's efficient operation is paramount to the gyroscope's effectiveness in stabilizing the vessel. However, the bearing system is subject to substantial wear and tear due to the high rotational speeds and forces exerted during operation. Regular maintenance and replacement of these bearings are necessary to ensure the gyroscope's optimal performance and longevity.

In the current state of technology, the process of maintaining or replacing the bearing systems within marine gyroscopes is cumbersome and time-consuming. Typically, these systems require the entire gyroscope or significant portions of it to be dismantled, often necessitating the removal of the gyroscope from the vessel. This process not only demands skilled labor and specialized tools but also results in significant downtime for the vessel, which can be costly and inconvenient.

Prior art solutions offer complex configurations that fail to provide a straightforward and efficient method for accessing and removing the bearing unit. These systems often involve intricate assemblies and require the complete disassembly of key gyroscopic components to reach the bearings, making routine maintenance a challenging task. Consequently, there is a pressing need for advancements in gyroscope bearing systems that simplify the process of bearing maintenance and replacement. US 2022/349711 A1 discloses a gyroscope bearing system according to the preamble of claim 1.

### SUMMARY

According to a first aspect of the disclosure, a gyroscope bearing system for a marine gyroscope, comprising a bearing unit having an inner ring and an outer ring and a plurality of rolling members arranged between them, the bearing unit being configured to surround and support a part of a flywheel, a sleeve arranged around the outer ring, wherein a locking plate is arranged below the bearing unit and the sleeve, the locking plate is movable between a first position where a vertical distance is present between the sleeve, the inner ring and a top face of the locking plate, and a second position where the locking plate is abutting the sleeve and the inner ring. The first aspect of the disclosure may seek to solve the problem of cumbersome and time-consuming maintenance processes for marine gyroscopes. By providing a system that allows easier access to and replacement of the bearing unit, the invention reduces the need for extensive disassembly and minimizes vessel downtime. A technical benefit may include improved efficiency in replacing bearing units, compared to prior art configurations that require more complex disassembly. The locking plate mechanism simplifies the process of securing and releasing the bearing unit, allowing for quicker maintenance and reduced operational interruptions for marine vessels.

Optionally in some examples, including in at least one preferred example, a plurality of fastening members are extending from a top part through bores in the sleeve to the locking plate. A technical benefit may include increased structural stability and ease of assembly, as the fastening members secure the components effectively, allowing for reliable operation in marine environments.

Optionally in some examples, including in at least one preferred example, the fastening members have an outer thread being configured to interact with an inner thread arranged in the locking plate. A technical benefit may include enhanced ease of moving the locking plate between the first position and the second position or vice versa, and enhanced ease of disassembly and reassembly, providing a secure and adjustable connection that facilitates maintenance and reduces downtime.

Optionally in some examples, including in at least one preferred example, the fastening members have a distal end in relation to the locking plate, which distal end is configured to be accessible from the outside of the system. A technical benefit may include improved accessibility for maintenance personnel, enabling quicker adjustments and inspections.

Optionally in some examples, including in at least one preferred example, the sleeve is cylindrical and the fastening members are arranged around the sleeve with a predetermined distance between them. A technical benefit may include uniform distribution of forces around the sleeve, enhancing the stability of the bearing system and reducing potential for misalignment during operation.

Optionally in some examples, including in at least one preferred example, the bearing system is configured to be moved when the locking plate is in the second position. A technical benefit may include streamlined maintenance procedures, as the system allows for easy repositioning of components without complete disassembly, thereby saving time and effort.

Optionally in some examples, including in at least one preferred example, the locking plate has an inner projection, the inner projection is configured to abut the inner ring in the second position. A technical benefit may include enhanced stability and precision in securing the bearing unit, preventing unintended movement and ensuring consistent performance during operation.

Optionally in some examples, including in at least one preferred example, the locking plate has a radial plate extension not exceeding a radial sleeve extension. A technical benefit may include a compact design that minimizes the risk of interference with other components, allowing for efficient use of space within the gyroscope assembly.

Optionally in some examples, including in at least one preferred example, the locking plate is circular. A technical benefit may include improved load distribution across the plate, contributing to a balanced and stable support structure for the bearing unit.

Optionally in some examples, including in at least one preferred example, the fastening members have a first indication indicating that the locking plate is in the first position and a second indication indicating that the locking plate is in the second position. A technical benefit may include increased safety and clarity during operation, as visual indicators help to confirm the position of the locking plate, reducing the likelihood of errors.

Optionally in some examples, including in at least one preferred example, the bearing unit has an upper bearing and a lower bearing, each bearing having an inner ring and an outer ring. A technical benefit may include improved load distribution and redundancy, as the dual bearing configuration provides additional support and reliability for the flywheel.

According to a second aspect of the disclosure, a marine gyroscope comprising a flywheel and a gyroscope bearing system as previously disclosed. The second aspect of the disclosure may seek to solve the problem of cumbersome and time-consuming maintenance processes for marine gyroscopes. By integrating a bearing system that allows easier access to and replacement of the bearing unit, the disclosure reduces the need for extensive disassembly and minimizes vessel downtime. A technical benefit may include improved efficiency in replacing bearing units, compared to prior art configurations that require more complex disassembly.

Optionally in some examples, including in at least one preferred example, further comprising a housing sleeve, the housing sleeve is configured to house the gyroscope bearing system. A technical benefit may include additional protection and structural support, safeguarding the bearing system from environmental factors and mechanical stresses.

According to a third aspect of the disclosure, a marine vessel comprising the marine gyroscope as previously disclosed. The third aspect of the disclosure may seek to solve the problem of cumbersome and time-consuming maintenance processes for marine gyroscopes on vessels. By incorporating a gyroscope with an easily maintainable bearing system, the disclosure reduces operational disruptions and enhances the reliability of vessel stability mechanisms. A technical benefit may include improved efficiency in replacing bearing units, compared to prior art configurations that require more complex disassembly.

According to a fourth aspect of the disclosure, a method for removing a gyroscope bearing system as previously disclosed from a marine gyroscope, comprising moving the locking plate from the first position to the second position so that the locking plate is abutting the sleeve and the inner ring, removing the bearing unit, the sleeve and the locking plate from the gyroscope. The fourth aspect of the disclosure may seek to solve the problem of cumbersome and time-consuming maintenance processes for marine gyroscopes. By providing a straightforward method for accessing and removing the bearing unit, the disclosure simplifies maintenance procedures and reduces vessel downtime. A technical benefit may include improved efficiency in replacing bearing units, compared to prior art configurations that require more complex disassembly.

Optionally in some examples, including in at least one preferred example, the locking plate is moved by turning one or more fastening members. A technical benefit may include ease of operation and precision, as the use of fastening members allows for controlled and accurate adjustments to the locking plate position.

Optionally in some examples, including in at least one preferred example, the removal of the bearing unit, sleeve, and locking plate is facilitated by utilizing a jacking tool to lift the assembly from the gyroscope. A technical benefit may include reduced manual effort and increased safety, as the jacking tool provides mechanical assistance in lifting heavy components, minimizing the risk of injury or damage.

Optionally in some examples, including in at least one preferred example, further comprising applying a lubricant to the rolling members of the bearing unit after the removal to ensure smooth operation upon reinstallation. A technical benefit may include prolonged operational lifespan and reduced friction, as proper lubrication ensures optimal performance and reduces wear on rolling members.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary gyroscope bearing system according to an example shown in a cross-sectional view.
**FIG. 2** is an enlarged view of the locking plate in the first position shown in a cross-sectional view.
**FIG. 3** shows the gyroscope bearing system of **FIG. 1** shown in a cross-sectional view.
**FIG. 4** is an enlarged view of the locking plate in the second position shown in a cross-sectional view.
**FIGS. 5-6** show an exemplary marine gyroscope in a cross-sectional view.
**FIG. 7** shows a top view of the top part.
**FIG. 8** shows a marine vessel.

### DETAILED DESCRIPTION

The detailed description set forth below provides information and examples of the disclosed technology with sufficient detail to enable those skilled in the art to practice the disclosure.

Marine gyroscopes play a crucial role in stabilizing seafaring vessels by counteracting the rolling motion caused by ocean waves. Central to their function is the bearing system, which supports the flywheel and allows it to rotate with minimal friction, thereby ensuring the gyroscope's effectiveness. However, due to the high rotational speeds and forces involved, these bearings undergo significant wear and tear, necessitating regular maintenance and replacement to maintain optimal performance and longevity. Current technology for maintaining or replacing these bearing systems is cumbersome and time-consuming, often requiring extensive disassembly of the gyroscope or its removal from the vessel. This process demands skilled labor, specialized tools, and leads to significant vessel downtime, which is costly and inconvenient. Existing solutions are complex, involving intricate assemblies that do not offer a straightforward method for accessing and removing the bearings, making routine maintenance a challenging task.

The industry demands innovative solutions that reduce the complexity of accessing and replacing the bearings within marine gyroscopes. An improved bearing system would enhance the maintainability of the gyroscope, minimize vessel downtime, and reduce maintenance costs. Such advancements are vital for the continued reliance on gyroscopic stabilization technology in marine environments, where operational efficiency and reliability are paramount.

The present disclosure addresses these issues by providing a more accessible and efficient gyroscope bearing system. It simplifies the process of maintenance and replacement, reducing the need for extensive disassembly and minimizing vessel downtime. Compared to prior solutions, this disclosure offers a practical approach that enhances operational efficiency and reliability, ultimately lowering maintenance costs and improving vessel stability.

The gyroscope is a device designed to maintain orientation and stability in a moving vessel, such as a ship, by leveraging the principles of angular momentum. At the heart of a marine gyroscope is the flywheel, a rotating mass that stabilizes the vessel by resisting changes to its orientation. This resistance is due to the conservation of angular momentum, a fundamental principle of physics. The flywheel is supported by a bearing unit, which is critical to its function. The bearing unit comprises an inner ring, an outer ring, and a plurality of rolling members, often balls or rollers, arranged between these rings. The bearing unit is configured to support the flywheel's shaft, allowing it to rotate with minimal friction. This rotation is essential for the gyroscopic effect that stabilizes the vessel.

The bearing unit in a gyroscope serves several functions. Primarily, it ensures smooth and efficient rotation of the flywheel by reducing friction between its moving parts. This efficiency is crucial for maintaining the high rotational speeds necessary for effective stabilization. Additionally, the bearing unit aligns the flywheel's axis, ensuring it rotates precisely and consistently.

Throughout operation, the bearing unit withstands various forces. Radial forces act perpendicular to the flywheel's shaft, primarily due to the flywheel's weight and the centrifugal forces generated by its rotation. These forces are significant, especially at high rotational speeds. Axial forces, although typically less than radial forces, also exert pressure parallel to the shaft, often resulting from misalignments or external impacts. The bearing unit must be robust enough to handle these forces without compromising the flywheel's rotation or the overall stability of the gyroscope.

Hence, the bearing unit in a marine gyroscope is pivotal for supporting the flywheel, allowing it to rotate smoothly and withstand the various radial and axial forces encountered during operation. This ensures the gyroscope can effectively stabilize the vessel, maintaining its orientation amidst the dynamic conditions at sea.

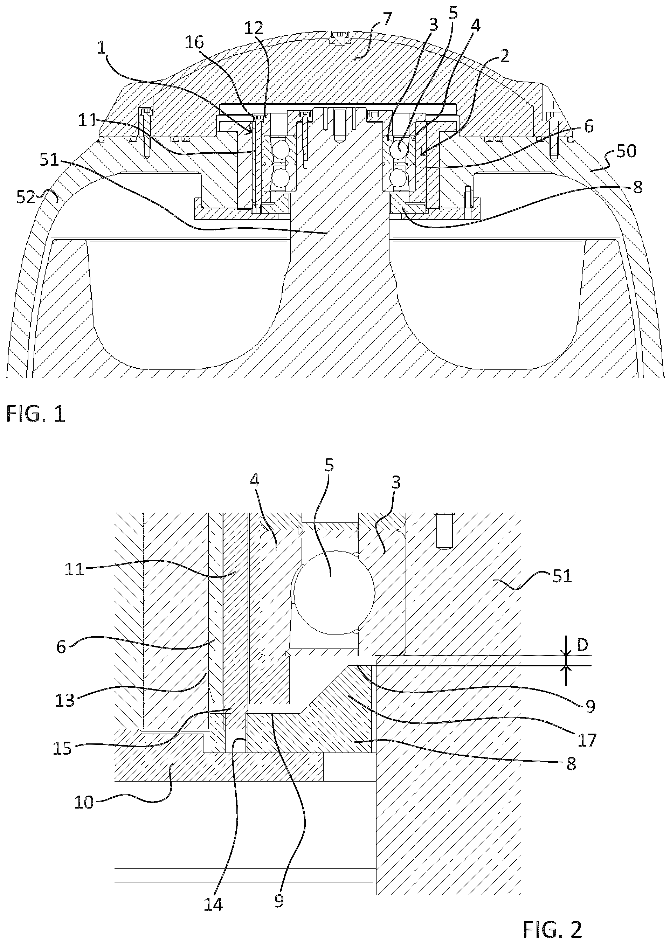

**FIGS. 1-4** are an exemplary gyroscope bearing system **1** according to an example. The gyroscope bearing system **1** is arranged in a marine gyroscope **50.** In **FIG. 1****,** only the upper part of the gyroscope **50** is shown in a cross-section. The gyroscope bearing system **1** comprises a bearing unit **2** having an inner ring **3** and an outer ring **4** and a plurality of rolling members **5** arranged between them, the bearing unit **2** being configured to surround and support a part of a flywheel **51.** In addition, a sleeve **6** arranged around the outer ring **4.** According to the disclosure, a locking plate **8** is arranged below the bearing unit **2** and the sleeve **6,** the locking plate **8** is movable between a first position where a vertical distance is present between the sleeve **6,** the inner ring **3** and a top face **9** of the locking plate **8,** and a second position where the locking plate **8** is abutting the sleeve **6** and the inner ring **3.**

In **FIGS. 1-2****,** the locking plate **8** is shown in the first position. In the first position the gyroscope bearing system **1** is in the operation mode where the bearing unit **2** supports the flywheel **51** during the normal operation of the marine gyroscope **50.** **FIG. 2** is an enlarged cross-sectional view of the locking plate **8** in relation to the other parts of the bearing system **1.** In the first position, a vertical distance **D** is present between the sleeve **6,** the inner ring **3** and a top face **9** of the locking plate **8.** A flange **10** is arranged below the locking plate **8** to ensure that the locking plate **8** cannot be moved below the first position.

A plurality of fastening members **11** are extending from a top part **12** through bores in the sleeve **6** into the locking plate **8.** The fastening members **11** ensure that the locking plate **8** is maintained in the intended position and that the locking plate **8** may be moved. The fastening members have an outer thread **15** being configured to interact with an inner thread **14** arranged in the locking plate **8.** A technical benefit may include enhanced ease of disassembly and reassembly, providing a secure and adjustable connection that facilitates maintenance and reduces downtime. The fastening members **11** have a distal end **16** in relation to the locking plate **8,** which distal end **16** is configured to be accessible from the outside of the system. A technical benefit may include improved accessibility for maintenance personnel, enabling quicker adjustments and inspections without removing the entire cover.

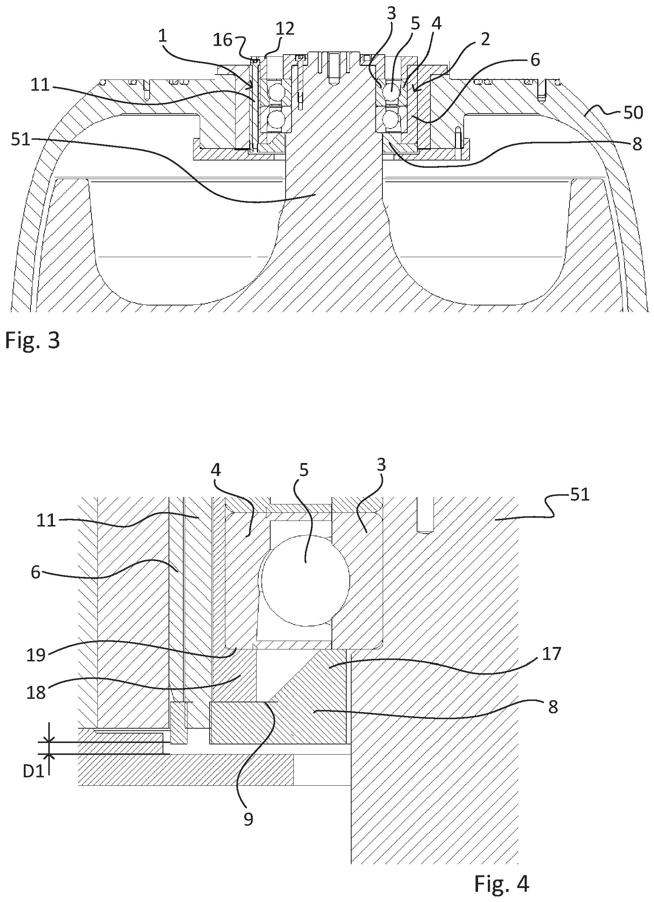

Furthermore, the locking plate **8** may have an inner projection **17,** the inner projection **17** is configured to abut the inner ring **3** in the second position as shown in **FIGS. 3-4****.** A technical benefit may include enhanced stability and precision in securing the bearing unit, preventing unintended movement and ensuring consistent performance during operation.

Also, the locking plate **8** may have a radial plate extension not exceeding a radial sleeve extension. A technical benefit may include a compact design that minimizes the risk of interference with other components, allowing for efficient use of space within the gyroscope.

Moreover, the locking plate **8** is circular. The locking plate **8** may be disc-formed with an opening in the center providing space for the flywheel **51.** A technical benefit may include improved load distribution across the locking plate **8,** contributing to a balanced and stable support structure for the bearing unit **2.**

A cover **7** is arranged above the bearing system **1** for protecting the system. The cover **7** is removable arranged to a housing **52** of the gyroscope **50.**

In **FIGS. 3-4****,** the second position of the locking plate **8** is shown where the locking plate **8** is abutting the sleeve **6** and the inner ring **3.** The cover **7** has been removed so that access to the bearing system **1** is provided. An operator may then activate the fastening members **11** so that the locking plate **8** is moved by screwing the outer thread of the fastening members **11** into the inner thread of the locking plate whereby the locking plate **8** will be arranged in the second position wherein it abuts the sleeve **6** and the inner ring **3** as seen in **FIG. 4****.** The locking plate **8** has been moved a vertical distance creating a distance **D1** from the flange **10.** The distance **D1** is substantially equal to the vertical distance **D.** In the second position of the locking plate the bearing unit **2** and the sleeve **6** is connected with each other so that they may be removed from the gyroscope in an expedient manner.

Furthermore, the sleeve **6** may have a lower radial projection **18,** the lower radial projection **18** has a horizontal face **19** supporting the outer ring **4.** A technical benefit may include enhanced support for the bearing unit, reducing stress on the outer ring and prolonging the lifespan of the system.

Moreover, the fastening members **11** may have a first indication indicating that the locking plate **8** is in the first position and a second indication indicating that the locking plate **8** is in the second position. A technical benefit may include increased safety and clarity during operation, as visual indicators help to confirm the position of the locking plate, reducing the likelihood of errors. The indications may be position of the distal end in relation to the top part. The top part **12** may comprise a recess wherein the distal end may be moved. The recess may indicate the position of the locking plate **8,** such as when the distal end is arranged a distance from a top face of the top part the locking plate **8** is in the first position, and when the distal end is aligned with the top face of the top part the locking plate **8** is in the second position.

Furthermore, three or more fastening members may extend from the top part through the sleeve into the locking plate. These fastening members are designated to ensure that the locking plate not is able to be moved further below in the intended position in the first position.

Additionally, the fastening members may be screws or bolts. A technical benefit may include ease of use and availability, as screws and bolts are common fasteners that facilitate straightforward assembly and disassembly processes. The fastening members **11** may also have a head at the distal end facilitating screwing of the fastening members **11.**

In the example disclosed in **FIGS. 1-4****,** the bearing unit **2** has an upper bearing and a lower bearing, each bearing having an inner ring and an outer ring. A technical benefit may include improved load distribution and redundancy, as the dual bearing configuration provides additional support and reliability for the flywheel. In other examples, a different number of bearings may be incorporated in the bearing system, such as one, two, three or more.

Moreover, the rolling members may be balls, rollers, or similar parts. A technical benefit may include versatility in adapting to different operational requirements, as various rolling member types can be selected to optimize performance and reduce friction.

Also, the bearing unit may be configured with a self-lubricating mechanism to enhance the longevity of the rolling members. A technical benefit may include reduced maintenance requirements and improved reliability, as the self-lubricating mechanism ensures continuous smooth operation without frequent manual lubrication.

Additionally, the plurality of rolling members may be coated with a friction-reducing material to minimize wear. A technical benefit may include decreased friction and improved efficiency, leading to lower energy consumption and extended lifespan of the rolling members.

In an example, the locking plate may be designed with a non-conductive material to prevent electrical interference with the gyroscope's operation. A technical benefit may include increased operational safety and reliability, as the non-conductive material prevents electrical shorts and interference.

Moreover, the fastening members may include a locking feature to prevent accidental loosening during operation. A technical benefit may include increased security and stability, ensuring that the components remain firmly in place during operation, even under dynamic conditions.

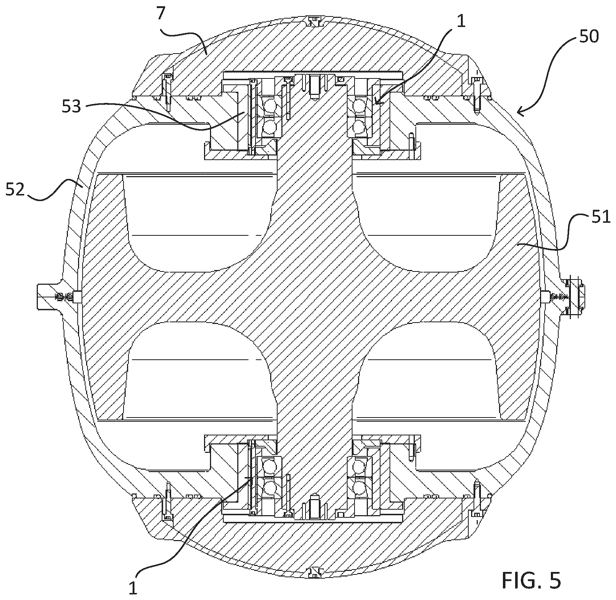

In **FIG. 5****,** the marine gyroscope **50** is shown in a cross-sectional view. The flywheel **51** is supported by two bearings systems **1,** one at the top and one of the bottom. The bearing systems **1** are substantially identically but are inverted. The gyroscope **50** further comprising a housing sleeve **53,** the housing sleeve **53** is configured to house the gyroscope bearing system **1.** A technical benefit may include additional protection and structural support, safeguarding the bearing system from environmental factors and mechanical stresses.

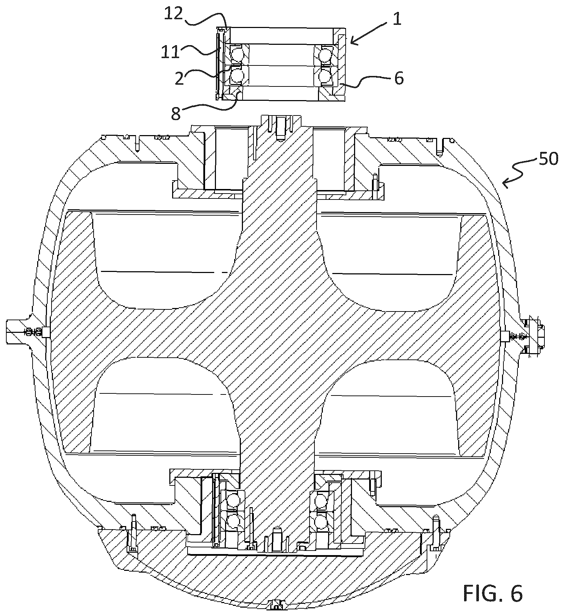

In **FIG. 6****,** the gyroscope **50** is shown in a cross-sectional view, with the bearing system **1** removed from the gyroscope **50.** The locking plate **8** together with the sleeve **6,** top part **12** and the fastening members **11** ensure that the bearing unit **2** are protected so that it may be removed as a single component.

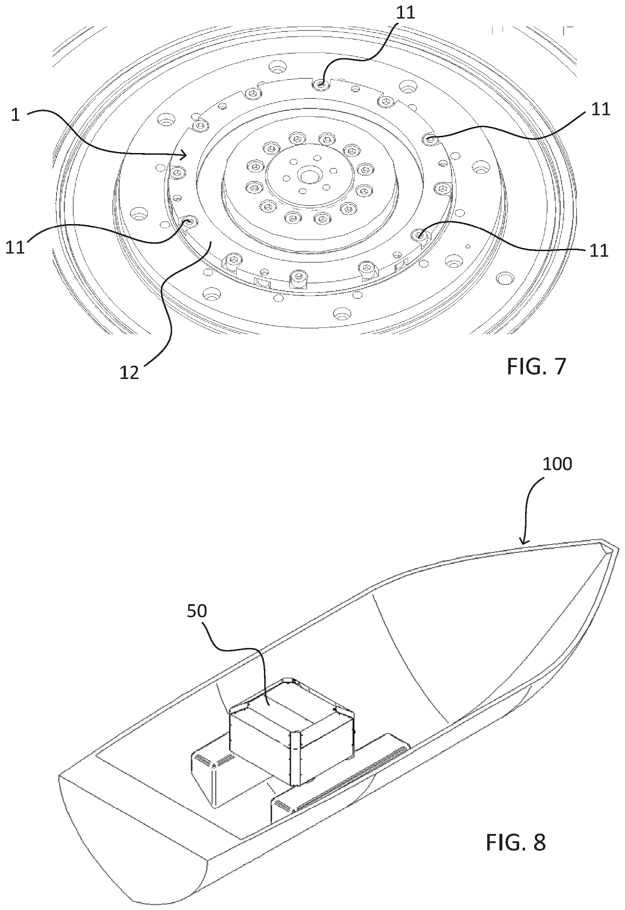

In **FIG. 7****,** a perspective top view of the bearing system **1** is shown. The top part **12** is visible and the fastening members **11** are arranged around the top part **12** with a predetermined distance between them. The sleeve is not visible in **FIG. 7****,** however, it is round seen in a top view. A technical benefit may include uniform distribution of forces around the sleeve, enhancing the stability of the bearing system and reducing potential for misalignment during operation.

In **FIG. 8****,** a vessel **100** is shown. The vessel **100** comprises the marine gyroscope **50** having the bearing system according to the disclosure.

In addition, a jacking ring may be configured to be arranged above and around the gyroscope bearing system, the jacking ring has an inner diameter being larger than an outer diameter of the sleeve whereby the jacking ring is abutting a house sleeve of the gyroscope. A technical benefit may include simplified lifting and positioning of the bearing system, enabling easier adjustments and maintenance without requiring extensive disassembly. The jacking ring may have an inwardly projecting flange, the inwardly projecting flange has a plurality of bores. A technical benefit may include increased stability and secure attachment, as the flange and bores provide precise alignment and support during operation. In addition, a plurality of jacking bolts may be configured to be inserted into the bores and screwed into a plurality of corresponding threads arranged in the top part. A technical benefit may include enhanced control over the lifting and positioning process, allowing for precise adjustments and secure fastening of the jacking ring to the cover.

Furthermore, a jacking tool may be arranged in connection with the jacking ring so that the bearing unit, sleeve and the locking plate can be moved up into the jacking ring by activating the jacking tool. A technical benefit may include reduced manual effort and increased efficiency, as the jacking tool automates the process of lifting and securing the bearing components.

The present disclosure can also be used in a kit comprising a gyroscope bearing system as previously disclosed, a jacking ring and a plurality of jacking bolts. A technical benefit may include comprehensive and convenient packaging, providing all necessary components for installation and maintenance in a single kit, facilitating ease of use and procurement. The kit may further comprise a jacking tool. A technical benefit may include enhanced versatility and functionality, as the inclusion of a jacking tool allows for efficient and controlled lifting and positioning of the gyroscope bearing system components.

The present disclosure also relates to a method for removing a gyroscope bearing system **1** as disclosed from a marine gyroscope, comprising
moving the locking plate **8** from the first position to the second position so that the locking plate **8** is abutting the sleeve **6** and the inner ring **3,**
removing the bearing unit **2,** the sleeve **6** and the locking plate **8** from the gyroscope. A technical benefit may include streamlined and efficient maintenance procedures, allowing for rapid removal and replacement of components without extensive disassembly.

Furthermore, the locking plate **8** may be moved by turning one or more fastening members. A technical benefit may include ease of operation and precision, as the use of fastening members allows for controlled and accurate adjustments to the locking plate position.

Additionally, the removal of the bearing unit, sleeve, and locking plate may be facilitated by utilizing a jacking tool to lift the assembly from the gyroscope. A technical benefit may include reduced manual effort and increased safety, as the jacking tool provides mechanical assistance in lifting heavy components, minimizing the risk of injury or damage.

Moreover, the method may also comprise applying a lubricant to the rolling members of the bearing unit after the removal to ensure smooth operation upon reinstallation. A technical benefit may include prolonged operational lifespan and reduced friction, as proper lubrication ensures optimal performance and reduces wear on rolling members.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made as defined in the appended claims. In the drawings and specification, there have been disclosed aspects for purposes of illustration only and not for purposes of limitation, the scope of the disclosure being set forth in the following claims.

## Claims

1. A gyroscope bearing system (1) for a marine gyroscope (50), comprising a bearing unit (2) having an inner ring (3) and an outer ring (4) and a plurality of rolling members (5) arranged between them, the bearing unit (2) being configured to surround and support a part of a flywheel (51),
a sleeve (6) arranged around the outer ring (4),
**characterized in that**
a locking plate (8) is arranged on an inner side of the gyroscope (50) relative to the bearing unit (2) and the sleeve (6), the locking plate (8) being movable between a first position where a vertical distance is present between the sleeve (6), the inner ring (3) and a top face (9) of the locking plate (8), and a second position where the locking plate (8) is abutting the sleeve (6) and the inner ring (3).

2. The gyroscope bearing system (1) of claim 1, wherein a plurality of fastening members (11) are extending from a top part (12) through bores in the sleeve (13) to the locking plate (8).

3. The gyroscope bearing system (1) of claim 2, wherein the fastening members (11) have an outer thread (15) being configured to interact with an inner thread (14) arranged in the locking plate (8).

4. The gyroscope bearing system (1) of claim 2 and/or 3, wherein the fastening members (11) have a distal end (16) in relation to the locking plate (8), which distal end (16) is configured to be accessible from the outside of the system.

5. The gyroscope bearing system (1) of any of the claims 2-4, wherein the sleeve (6) is cylindrical and the fastening members (11) are arranged around the sleeve with a predetermined distance between them.

6. The gyroscope bearing system (1) of any of the claims 1-5, wherein the bearing system is configured to be moved when the locking plate (8) is in the second position.

7. The gyroscope bearing system (1) of any of the claims 1-6, wherein the locking plate (8) has an inner projection (17), the inner projection (17) is configured to abut the inner ring (3) in the second position.

8. The gyroscope bearing system (1) of any of the claims 1-7, wherein the locking plate (8) has a radial plate extension not exceeding a radial sleeve extension.

9. The gyroscope bearing system (1) of any of the claims 2-8, wherein the fastening members (11) have a first indication indicating that the locking plate (8) is in the first position and a second indication indicating that the locking plate is in the second position.

10. The gyroscope bearing system (1) of any of the claims 1-9, wherein the bearing unit (2) has an upper bearing and a lower bearing, each bearing having an inner ring and an outer ring.

11. A marine gyroscope (50) comprising a flywheel (51) and a gyroscope bearing system (1) of any of the claims 1-10.

12. The marine gyroscope (50) of claim 11, further comprising a housing sleeve (53), the housing sleeve (53) is configured to house the gyroscope bearing system (1).

13. A marine vessel (100) comprising the marine gyroscope (50) of any of the claims 11-12.

14. A method for removing a gyroscope bearing system (1) of any of the claims 1-10 from a marine gyroscope (50), comprising
moving the locking plate (8) from the first position to the second position so that the locking plate (8) is abutting the sleeve (6) and the inner ring (3),
removing the bearing unit (2), the sleeve (6) and the locking plate (8) from the gyroscope.

15. The method of claim 14, whereby the locking plate (8) is moved by turning one or more fastening members (11).

## Patentansprüche

1. Ein Gyroskop-Lagerungssystem (1) für ein marines Gyroskop (50), umfassend eine Lagerungseinheit (2) mit einem Innenring (3) und einem Außenring (4) und eine Vielzahl von Rollelementen (5), die zwischen ihnen angeordnet sind, wobei die Lagerungseinheit (2) so konfiguriert ist, dass sie einen Teil eines Schwungrads (51) umgibt und trägt,
eine Hülse (6), die um den Außenring (4) angeordnet ist,
**gekennzeichnet durch**
eine Arretierungsscheibe (8), die auf einer Innenseite des Gyroskops (50) relativ zur Lagerungseinheit (2) und der Hülse (6) angeordnet ist, wobei die Arretierungsscheibe (8) zwischen einer ersten Position beweglich ist, bei der ein vertikaler Abstand zwischen der Hülse (6), dem Innenring (3) und einer Oberseite (9) der Arretierungsscheibe (8) vorhanden ist, und einer zweiten Position, bei der die Arretierungsscheibe (8) an der Hülse (6) und dem Innenring (3) anliegt.

2. Das Gyroskop-Lagerungssystem (1) gemäß Anspruch 1, wobei eine Vielzahl von Befestigungselementen (11) von einem oberen Teil (12) durch Bohrungen in der Hülse (13) zu der Arretierungsscheibe (8) verlaufen.

3. Das Gyroskop-Lagerungssystem (1) gemäß Anspruch 2, wobei die Befestigungselemente (11) einen äußeren Gewinde (15) aufweisen, der so konfiguriert ist, dass er mit einem inneren Gewinde (14) zusammenwirkt, das in der Arretierungsscheibe (8) angeordnet ist.

4. Das Gyroskop-Lagerungssystem (1) gemäß einem der Ansprüche 2 und/oder 3, wobei die Befestigungselemente (11) ein distales Ende (16) in Bezug auf die Arretierungsscheibe (8) aufweisen, wobei dieses distale Ende (16) von außen am System zugänglich sein kann.

5. Das Gyroskop-Lagerungssystem (1) gemäß einem der Ansprüche 2-4, wobei die Hülse (6) zylindrisch ist und die Befestigungselemente (11) um die Hülse mit einem vorgegebenen Abstand zueinander angeordnet sind.

6. Das Gyroskop-Lagerungssystem (1) gemäß einem der Ansprüche 1 bis 5, wobei das Lagerungssystem so konfiguriert ist, dass es bewegt wird, wenn die Arretierungsscheibe (8) in der zweiten Position ist.

7. Das Gyroskop-Lagerungssystem (1) gemäß einem der Ansprüche 1 bis 6, wobei die Arretierungsscheibe (8) einen inneren Vorsprung (17) aufweist, wobei der innere Vorsprung (17) so konfiguriert ist, dass er in der zweiten Position an den Innenring (3) anliegt.

8. Das Gyroskop-Lagerungssystem (1) gemäß einem der Ansprüche 1-7, wobei die Arretierungsscheibe (8) eine radiale Plattenerweiterung aufweist, die nicht größer ist als eine radiale Hülseerweiterung.

9. Das Gyroskop-Lagerungssystem (1) gemäß einem der Ansprüche 2-8, wobei die Befestigungselemente (11) eine erste Kennzeichnung haben, die angibt, dass die Arretierungsscheibe (8) in der ersten Position ist. und eine zweite Kennzeichnung haben, die angibt, dass die Arretierungsscheibe in der zweiten Position ist.

10. Das Gyroskop-Lagerungssystem (1) gemäß einem der Ansprüche 1-9, wobei die Lagerungseinheit (2) ein oberes Lager und ein unteres Lager aufweist, wobei jedes Lager einen Innenring und einen Außenring hat.

11. Ein marines Gyroskop (50), umfassend ein Schwungrad (51) und ein Gyroskop-Lagerungssystem (1) gemäß einem der Ansprüche 1-10.

12. Das marine Gyroskop (50) gemäß Anspruch 11, ferner umfassend eine Gehäusehülse (53), wobei die Gehäusehülse (53) dazu konfiguriert ist, das Gyroskop-Lagerungssystem (1) aufzunehmen.

13. Ein marines Schiff (100), umfassend das marine Gyroskop (50) gemäß einem der Ansprüche 11-12.

14. Eine Methode zum Entfernen eines Gyroskop-Lagerungssystems (1) gemäß einem der Ansprüche 1-10. von einem Marine-Gyroskop (50), umfassend:
das Bewegen der Arretierungsscheibe (8) von der ersten Position in die zweite Position, so dass die Arretierungsscheibe (8) auf der Hülse (6) und dem Innenring (3) anliegt,
das Entfernen der Lagerungseinheit (2), der Hülse (6) und der Arretierungsscheibe (8) vom Gyroskop.

15. Die Methode gemäß Anspruch 14, wobei die Arretierungsscheibe (8) durch Drehen eines oder mehrerer Befestigungselemente (11) bewegt wird.

## Revendications

1. Un système de roulement de gyroscope (1) pour un gyroscope marin (50), comprenant une unité de roulement (2) ayant une bague intérieure (3) et une bague extérieure (4) et une pluralité d'éléments roulants (5) agencés entre elles, l'unité de roulement (2) étant configurée pour entourer et supporter une partie d'un volant d'inertie (51),
un manchon (6) agencé autour de la bague extérieure (4),
**caractérisé en ce que**
une plaque de verrouillage (8) est agencée sur un côté intérieur du gyroscope (50) par rapport à l'unité de roulement (2) et au manchon (6), la plaque de verrouillage (8) étant déplaçable entre une première position où une distance verticale est présente entre le manchon (6), la bague intérieure (3) et une face supérieure (9) de la plaque de verrouillage (8), et une deuxième position où la plaque de verrouillage (8) est en butée contre le manchon (6) et la bague intérieure (3).

2. Le système de roulement de gyroscope (1) de la revendication 1, dans lequel une pluralité d'éléments de fixation (11) s'étendent depuis une partie supérieure (12) à travers des perçages dans le manchon (13) jusqu'à la plaque de verrouillage (8).

3. Le système de roulement de gyroscope (1) de la revendication 2, dans lequel les éléments de fixation (11) ont un filetage extérieur (15) configuré pour interagir avec un filetage intérieur (14) agencé dans la plaque de verrouillage (8).

4. Le système de roulement de gyroscope (1) de la revendication 2 et/ou 3, dans lequel les éléments de fixation (11) ont une extrémité distale (16) par rapport à la plaque de verrouillage (8), laquelle extrémité distale (16) est configurée pour être accessible depuis l'extérieur du système.

5. Le système de roulement de gyroscope (1) de l'une quelconque des revendications 2 à 4, dans lequel le manchon (6) est cylindrique et les éléments de fixation (11) sont agencés autour du manchon avec une distance prédéterminée entre eux.

6. Le système de roulement de gyroscope (1) de l'une quelconque des revendications 1 à 5, dans lequel le système de roulement est configuré pour être déplacé lorsque la plaque de verrouillage (8) est dans la deuxième position.

7. Le système de roulement de gyroscope (1) de l'une quelconque des revendications 1 à 6, dans lequel la plaque de verrouillage (8) présente une saillie intérieure (17), la saillie intérieure (17) est configurée pour venir en butée contre la bague intérieure (3) dans la deuxième position.

8. Le système de roulement de gyroscope (1) de l'une quelconque des revendications 1 à 7, dans lequel la plaque de verrouillage (8) présente une extension de plaque radiale ne dépassant pas une extension de manchon radiale.

9. Le système de roulement de gyroscope (1) de l'une quelconque des revendications 2 à 8, dans lequel les éléments de fixation (11) ont une première indication indiquant que la plaque de verrouillage (8) est dans la première position et une deuxième indication indiquant que la plaque de verrouillage est dans la deuxième position.

10. Le système de roulement de gyroscope (1) de l'une quelconque des revendications 1 à 9, dans lequel l'unité de roulement (2) a un roulement supérieur et un roulement inférieur, chaque roulement ayant une bague intérieure et une bague extérieure.

11. Un gyroscope marin (50) comprenant un volant d'inertie (51) et un système de roulement de gyroscope (1) de l'une quelconque des revendications 1 à 10.

12. Le gyroscope marin (50) de la revendication 11, comprenant en outre un manchon de logement (53), le manchon de logement (53) est configuré pour loger le système de roulement de gyroscope (1).

13. Un navire marin (100) comprenant le gyroscope marin (50) de l'une quelconque des revendications 11-12.

14. Un procédé pour retirer un système de roulement de gyroscope (1) de l'une
quelconque des revendications 1 à 10 d'un gyroscope marin (50), comprenant
le déplacement de la plaque de verrouillage (8) de la première position à la deuxième position de sorte que la plaque de verrouillage (8) est en butée contre le manchon (6) et la bague intérieure (3),
le retrait de l'unité de roulement (2), du manchon (6) et de la plaque de verrouillage (8) du gyroscope.

15. Le procédé de la revendication 14, selon lequel la plaque de verrouillage (8) est déplacée en tournant un ou plusieurs éléments de fixation (11).
